# EUROPEAN PATENT APPLICATION

(11) **EP 4 667 882 A1**
(43) Date of publication of application: **24.12.2025**
(21) Application number: 24756506.2
(22) Date of filing: 09.01.2024
(51) Int. Cl.: G01F 23/284

(54) **SENSOR MODULE**

(30) Priority: 14.02.2023 JP 2023021144
(71) Applicant: HOSIDEN CORPORATION, Yao-shi, Osaka 581-0071 (JP)
(72) Inventor: TOYOTA Naoki, Yao-shi, Osaka 581-0071 (JP)
(74) Representative: LBP Lemcke, Brommer & Partner Patentanwälte mbB
(86) International application number: PCT/JP2024/000163
(87) International publication number: WO 2024/171654

(57) **Abstract**

A sensor module (100) placeable outside a cap (3) attachable to an opening section (2) of a container (1) containing a content, the sensor module (100) being configured to be housed in a housing (10), includes: a sensor section (20); and a lens section (32). The sensor section (20) includes: a transmission and reception section (21): and a computation section. The transmission and reception section (21) includes: a transmitter (21a) configured to transmit an electric wave; and a receiver (21b) configured to receive the electric wave. The electric wave that the transmitter (21a) transmits passes through the cap (3) and enters the container (1). The electric wave that the receiver (21b) receives is a reflected wave resulting from the electric wave being reflected by the content (5) in the container (1). The lens section (32) faces the transmission and reception section (21). The computation section is configured to compute a remaining amount of the content (5), based on a time interval from (i) the transmitter (21a) transmitting the electric wave to (ii) the receiver (21b) receiving the reflected wave.

## Description

### TECHNICAL FIELD

This disclosure relates to a sensor module.

### RELATED ART

In cold places such as Hokkaido, people use kerosene as fuel for main home heaters. People often use, as a source of kerosene for a home heater, an outdoor fuel tank for supplying kerosene to an indoor home heater to continue using the home heater in winter. To continue using a home heater, the fuel tank should desirably be refilled with kerosene, not after, but before the fuel tank becomes empty. In view of that, a fuel tank may be provided with a dedicated sensor for detecting the remaining amount of kerosene.

Patent Literature 1 discloses a non-contact minute position change sensor unit including a photosensor and configured to detect kerosene having a predetermined amount or less in a fuel tank. The non-contact minute position change sensor unit includes a housing configured to be fitted with a portion of a fuel tank which portion is near a remaining amount gauge. This allows the non-contact minute position change sensor unit to be used to detect the amount of kerosene remaining in the fuel tank. The remaining amount gauge includes a float-type indicator configured to move vertically in response to a change in the amount of kerosene remaining in the fuel tank. The photosensor detects a change of the position of the indicator as a measurement target to detect kerosene having a predetermined amount or less in the fuel tank. Patent Literature 1 discloses transmitting this detection signal together with the ID of the fuel tank to a fuel retailer or management company that manages the fuel tank over a public communication network such as a telephone line. This allows the fuel tank to be refilled with kerosene before becoming empty.

### CITATION LIST

### PATENT LITERATURE

Patent Literature 1: Japanese Unexamined Patent Application Publication, Tokukai, No. 2006-234673

### SUMMARY

### TECHNICAL PROBLEM

The non-contact minute position change sensor unit disclosed in Patent Literature 1 includes a single photosensor and is only capable of detecting whether kerosene has a predetermined amount or less. Detecting two or more predetermined amounts would require an equal number of photosensors. In that case, disposing two or more photosensors with respective predetermined resolving powers such that the photosensors as a whole are not higher than a single photosensor would require the photosensors to be offset from each other in a direction (for example, the peripheral direction) different from the direction in which the indicator moves (that is, the vertical direction). This would require the non-contact minute position change sensor unit to be large in size. Further, not all existing fuel tanks are equipped with a remaining amount gauge including a float-type indicator. The non-contact minute position change sensor unit disclosed in Patent Literature 1 may be incapable of detecting kerosene having a predetermined amount or less in a fuel tank not equipped with a remaining amount gauge.

This disclosure has been accomplished in view of the above issues, and has an object of providing a sensor module usable for an existing container (fuel tank) and configured to detect two or more remaining amounts (predetermined amounts) of a content (kerosene).

### SOLUTION TO PROBLEM

A sensor module as an embodiment of this disclosure is a sensor module placeable outside a cap attachable to an opening section of a container containing a content, the sensor module being configured to be housed in a housing, the sensor module including: a sensor section; and a lens section, wherein the sensor section includes: a transmission and reception section including: a transmitter configured to transmit an electric wave; and a receiver configured to receive the electric wave; and a computation section, the transmitter transmits an electric wave that passes through the cap into the container, the receiver receives a reflected wave resulting from the electric wave being reflected by the content in the container, the lens section faces the transmission and reception section and includes a bottom wall that allows passage of the electric wave that the transmitter transmits and the reflected wave, and the computation section is configured to compute a remaining amount of the content, based on a time interval from (i) the transmitter transmitting the electric wave to (ii) the receiver receiving the reflected wave.

The sensor module as the present embodiment is disposed outside the cap. This eliminates the need to modify an existing container to provide the sensor module for the container for the computation of the amount of a content remaining in the container. The sensor module, which computes the remaining amount of a content with use of an electric wave, easily detects (or computes) each of two or more different remaining amounts of the content, as compared to the case of measuring the position of an indicator. The sensor module causes an electric wave to be directly reflected by a content and computes a time interval extending until receipt of the electric wave for the computation of the remaining amount of the content. This allows a single sensor module to detect each of two or more remaining amounts of a content with high resolution.

A sensor module as another embodiment of this disclosure is configured such that the bottom wall is in contact with an upper face of the cap.

The present embodiment is configured such that the lens section includes a bottom wall in contact with the upper face of the cap. This prevents an electric wave from the transmitter and a reflected wave from a content from being reflected at the boundary between the bottom wall and the upper face.

A sensor module as another embodiment of this disclosure is configured such that the housing includes an engaging section, the cap includes an engagement section, the engaging section is engageable with the engagement section for the housing to be detachably fixed to the container, and the lens section is integral with the cap.

The present embodiment eliminates the need to have the lens section supported by a component such as the cap or the housing to close the gap between the lens section and the cap.

A sensor module as another embodiment of this disclosure further includes: an urging member urging the lens section toward an upper face of the cap, wherein the lens section is held by the housing with the urging member in-between.

The present embodiment is configured such that if the sensor module is moved away from the cap, the bottom wall of the lens section remains in contact with the upper face of the cap.

A sensor module as another embodiment of this disclosure is configured such that the housing includes an engaging section, the cap includes an engagement section, and the engaging section is engageable with the engagement section for the housing and the cap to define a water-tight closed space.

The sensor module as the present embodiment prevents entry of rain water into the closed space when disposed outdoors.

A sensor module as another embodiment of this disclosure is configured such that the housing includes an engaging section engageable with an engagement section of an engagement member fixable to the container, and the engaging section is engageable with the engagement section for the housing, the engagement member, and the cap to define a water-tight closed space.

The sensor module as the present embodiment is provided with an engagement member to be detachably fixed to the container without the need to modify the container or the cap. The sensor module as the present embodiment prevents entry of rain water into the closed space when disposed outdoors.

A sensor module as another embodiment of this disclosure further includes: an electric power source; and an external communication section, wherein the electric power source is configured to supply electric power to the sensor section and the external communication section, and the external communication section is configured to transmit to an external device a radio signal indicative of the remaining amount.

The sensor module as the present embodiment remains driven without an external power source. The sensor module also eliminates the need to, for example, see inside the container and informs a person at a remote place of the remaining amount of the content.

### BRIEF DESCRIPTION OF DRAWINGS

Fig. 1 is an exploded view of a sensor module as a first embodiment and a fuel tank as separated from each other.
Fig. 2 is an exploded perspective view of a sensor module.
Fig. 3 is an exploded perspective view of a sensor module.
Fig. 4 is a cross-sectional view of a sensor module as attached to a fuel tank.
Fig. 5 is a cross-sectional view of a sensor module as a variation of a first embodiment as attached to a fuel tank.
Fig. 6 is an exploded view of a sensor module as a second embodiment and a fuel tank as separated from each other.
Fig. 7 is an exploded perspective view of a sensor module.
Fig. 8 is an exploded perspective view of a sensor module.
Fig. 9 is a cross-sectional view of a sensor module as attached to a fuel tank.

### DESCRIPTION OF EMBODIMENTS

The description below deals in detail with sensor modules as embodiments of this disclosure with reference to drawings. The embodiments described below are merely example sensor modules; this disclosure is not limited to the embodiments. The sensor module according to this disclosure may be embodied variously without departing from the scope of this disclosure.

### [First Embodiment]

### [Configuration of Sensor Module]

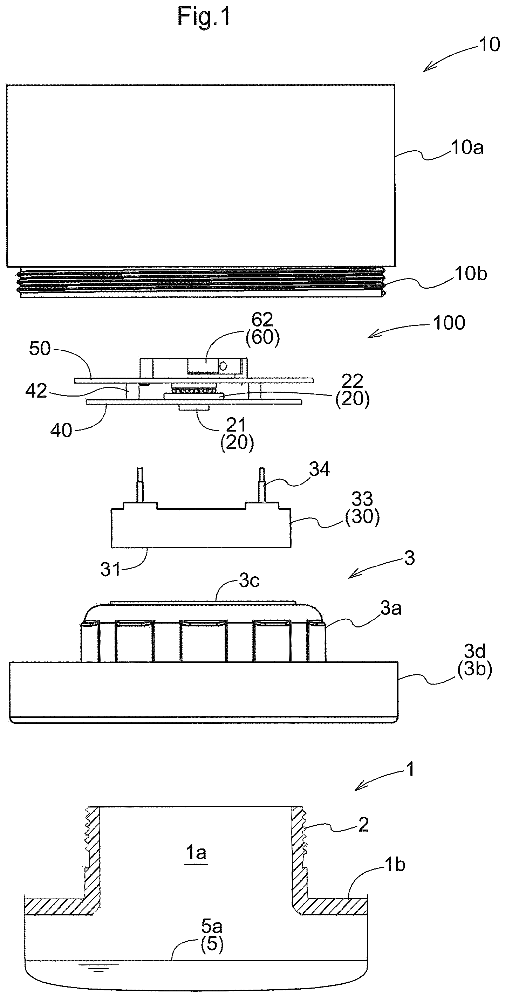

Fig. 1 illustrates a sensor module 100 as a first embodiment of this disclosure, which is attached to an outer portion of a cap 3 configured to block an opening section 2 of a fuel tank 1 (which is an example container) and is housed in a housing 10 for use. The fuel tank 1 includes a tank body 1b (which is an example container body) and an opening section 2 in the form of a cylinder protruding from the tank body 1b. The tank body 1b has an internal space 1a communicating with an inner space of the opening section 2 and configured to receive kerosene 5 (which is an example content) injected through the opening section 2, so that the internal space 1a stores kerosene 5. The sensor module 100 is configured to detect the amount of kerosene 5 remaining in the internal space 1a of the fuel tank 1. The cap 3 is made of resin and screwable into the opening section 2 to block the opening section 2.

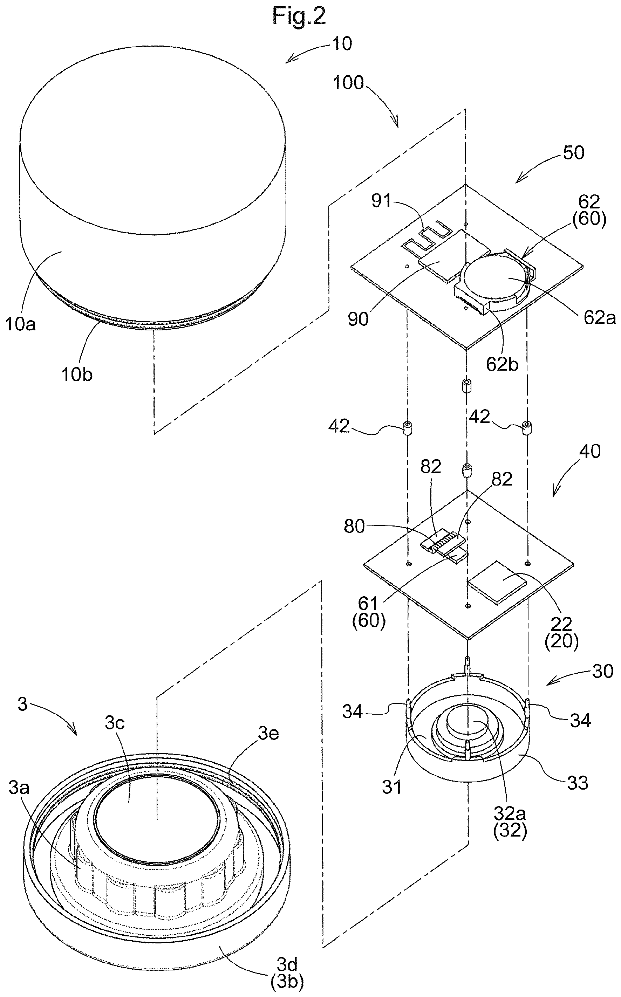

As illustrated in Figs. 2 to 4, the sensor module 100 includes a sensor section 20 and a lens section 32. The sensor section 20 includes a transmission and reception integrated circuit (IC) 21 (which is an example transmission and reception section) and a computation IC 22 (which is an example computation section).

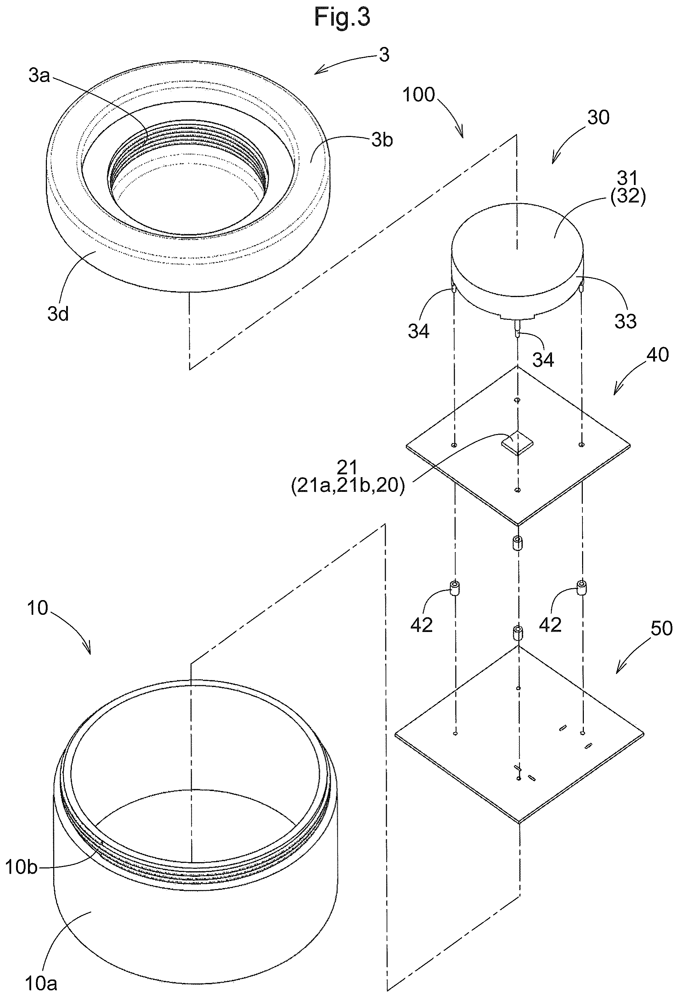

As illustrated in Figs. 2 and 3, the transmission and reception IC 21 and the computation IC 22 are mounted on respective faces of a first substrate 40. The transmission and reception IC 21 includes a transmitter 21a and a receiver 21b. The transmission and reception IC 21 and the computation IC 22 may alternatively be mounted on an identical face of the first substrate 40.

The transmitter 21a has the function of transmitting to an external device an electric wave resulting from modulating a signal to be transmitted. The receiver 21b has the function of demodulating an external electric wave to receive a signal. The transmission and reception IC 21 is configured to receive at the receiver 21b an electric wave transmitted by the transmitter 21a. The transmission and reception IC 21, which is mounted on the first substrate 40, modulates a signal to be transmitted and transmits an electric wave from a transmission antenna (not illustrated in the drawings) of the transmitter 21a, and demodulates an electric wave received by a reception antenna (not illustrated in the drawings) of the receiver 21b. The computation IC 22 has the function of computing the amount of kerosene 5 remaining in the internal space 1a of the fuel tank 1 on the basis of a time interval extending until the reception antenna receives an electric wave transmitted from the transmission antenna.

The sensor module 100 includes an electric power source 60 including a power source IC 61 and a battery section 62. The power source IC 61 is mounted on that face of the first substrate 40 on which the computation IC 22 is mounted. The battery section 62 includes a battery 62a and a battery socket 62b holding the battery 62a. The battery socket 62b, by which the battery 62a is held, is mounted on a face of a second substrate 50. The transmission and reception IC 21, the computation IC 22, and the power source IC 61, which are mounted on the first substrate 40, are operable by electric power from the battery 62a, which is mounted on the second substrate 50. The power source IC 61 may alternatively be mounted on a face of the first substrate 40 which face differs from that face of the first substrate 40 on which the computation IC 22 is mounted. If the sensor module 100 excludes the second substrate 50, the battery socket 62b may be mounted on the first substrate 40.

The sensor module 100 includes an external communication IC 90 (which is an example external communication section) on that face of the second substrate 50 on which the battery section 62 is mounted. The sensor module 100 includes an external communication antenna 91 disposed in a pattern on that face of the second substrate 50 on which the external communication IC 90 is mounted, and configured to transmit to an external device a signal generated by the external communication IC 90. The external communication antenna 91 may alternatively be in the form of a dedicated antenna component instead of a pattern.

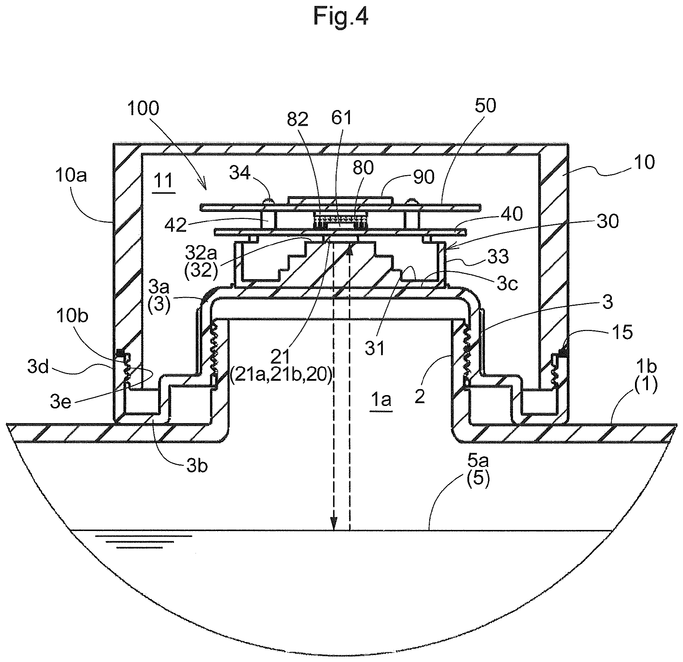

As illustrated in Figs. 2 and 4, the first substrate 40 and the second substrate 50 are electrically connected to each other by a connection member 80 in the form of, for example, a flexible flat cable (FFC) or flexible printed circuit (FPC) configured to electrically connect the first substrate 40 and the second substrate 50 to each other. The first substrate 40 and the second substrate 50 are each provided with connectors 82 to which the respective opposite ends of the connection member 80 are electrically connected. The first substrate 40 and the second substrate 50 are electrically connected to each other by the connectors 82 on the first substrate 40, the connection member 80, and the connectors 82 on the second substrate 50. The above components may be replaced with (i) a harness including an electric wire and plugs, as well as respective receptacles mounted on the first substrate 40 and the second substrate 50 and connected to the harness, (ii) a connector for substrate-to-substrate connection, or (iii) other components.

The lens section 32 is integral with a substrate holder 30 that is made of resin and that is in the form of a bottomed cylinder including a bottom wall 31 and a circumferential wall 33 standing on the edge of the bottom wall 31. The substrate holder 30 holds the first substrate 40 and the second substrate 50 (described later). The substrate holder 30, the lens section 32 protrudes from the bottom surface of the substrate holder 30 toward its opening. The first substrate 40 is fixed to the substrate holder 30 such that the transmission and reception IC 21 is in contact with the top face 32a of the lens section 32. This means that the lens section 32 protrudes by an amount that causes the transmission and reception IC 21 to be in contact with the top face 32a with the first substrate 40 fixed to the substrate holder 30. The bottom wall 31 is part of the lens section 32.

The circumferential wall 33 of the substrate holder 30 includes two or more (four for the present embodiment) support bosses 34 arranged circumferentially at equal intervals and extending in the direction in which the circumferential wall 33 stands. The first substrate 40 and the second substrate 50 are supported by the support bosses 34 to be fixed to the substrate holder 30. The first substrate 40 and the second substrate 50 each have through holes corresponding in position to the respective support bosses 34, which extend through the respective through holes. The circumferential wall 33 may alternatively have a single support boss 34. The support bosses 34 may be integral with the substrate holder 30, or may be press-fitted or bonded, for instance, to the substrate holder 30.

The first substrate 40 and the second substrate 50 may each be fixed to the substrate holder 30 with use of the support bosses 34 by, for instance, heating the respective tips of the support bosses 34 to melt the tips so that the tips are thermally welded to the second substrate 50. The support bosses 34 may alternatively each have a tip in the form of a split pin for fixing the first substrate 40 and the second substrate 50 or a tip with a female thread for the first substrate 40 and the second substrate 50 to be fixed with use of a male screw. The first substrate 40 and the second substrate 50 may be fixed to the substrate holder 30 in any manner.

The sensor module 100 includes spacers 42 disposed between the first substrate 40 and the second substrate 50 and extending through and supported by the respective support bosses 34. The first substrate 40 and the second substrate 50 are separated from each other by the spacers 42. The above components may be replaced with the following configuration: The support bosses 34 each have an outer diameter large at the base end portion and small at the tip with a step between the base end portion and the tip. The first substrate 40 has through holes each with an inner diameter through which the base end portion of the corresponding support boss 34 is capable of extending. The second substrate 50 has through holes each with an inner diameter through which the tip of the corresponding support boss 34 is capable of extending and through which the base end portion thereof is incapable of extending. With this configuration, inserting the support bosses 34 through the first substrate 40 and the second substrate 50 allows the second substrate 50 to be supported by the step between the base end portion and the tip of each support boss 34. This eliminates the need for the spacers 42 to allow the first substrate 40 and the second substrate 50 to be fixed while being separated from each other. The sensor module 100 may alternatively include separate support bosses 34 with respective outer diameters different from the first substrate 40 and the second substrate 50. This configuration also eliminates the need for the spacers 42.

If the sensor module 100 includes a second substrate 50, the first substrate 40 and the second substrate 50 may be fixed to the cap 3 with use of at least one support boss 34 and spacers 42 configured to keep a fixed distance between those respective faces of the first substrate 40 and the second substrate 50 which face each other (see Fig. 4). The sensor module 100 may also be configured such that the first substrate 40 is fixed to the cap 3 with use of at least one support boss 34, whereas the second substrate 50 is fixed to the cap 3 with use of another support boss (not illustrated in the drawings). The first substrate 40 and the second substrate 50 may each be fixed to the cap 3 in any other manner as well. The expression "fixed to the cap 3" refers to being fixed to the cap 3 directly or indirectly with another element in-between. The support boss 34 and/or another support boss may be integral with or separate from the cap 3 or the lens section 32.

The transmission and reception IC 21 (which includes a transmission antenna and a reception antenna [not illustrated in the drawings]), which is mounted on the first substrate 40, is covered by the substrate holder 30. The expression "covered by the substrate holder 30" refers to the transmission and reception IC 21 being entirely contained in the substrate holder 30 with its circumferential wall 33 in contact with the first substrate 40 as illustrated in Fig. 4. The circumferential wall 33 may alternatively be separated from the first substrate 40 by a gap, in which case the gap allows a person to see at least a portion of the transmission and reception IC 21, the transmission antenna (not illustrated in the drawings), and the reception antenna (not illustrated in the drawings).

The substrate holder 30 may be fixed to the cap 3 with use of double-side tape, for example. Specifically, the bottom wall 31 of the substrate holder 30 is in contact with the upper face 3c of the cap 3. The substrate holder 30 may be fixed to the cap 3 with use of, for example, adhesive or in any other manner. Fixing the substrate holder 30 to the cap 3 fixes the first substrate 40 and the second substrate 50 (which are fixed to the substrate holder 30 with use of the support bosses 34) to the cap 3 and the fuel tank 1. Fixing the substrate holder 30 to the cap 3 reliably brings the bottom wall 31 into contact with the upper face 3c regardless of the height of the cap 3, which height can vary depending on the type of fuel tank 1.

The lens section 32 faces the transmission and reception IC 21 of the sensor section 20. The transmission and reception IC 21 is in close contact with the top face 32a of the lens section 32. The transmission and reception IC 21 may alternatively be separated from the top face 32a. The lens section 32 for the present embodiment includes different portions with different thicknesses, shapes, and/or the like for a lens function. The lens section 32 provided for the substrate holder 30 enables the transmission and reception IC 21 to transmit and receive electric waves more efficiently. Specifically, the lens section 32 includes three cylinders stacked on top of one another which cylinders include a cylinder facing the bottom wall 31 and having the largest outer diameter and a cylinder facing the opening and having the smallest outer diameter. The lens section 32 for the present embodiment is in the form of a convex lens. The lens section 32 may alternatively be in the form of a concave lens. The lens section 32 may have any shape depending on the purpose. The lens section 32 may alternatively have no lens function.

The cap 3 includes a lid 3a and a fixing section 3b. The lid 3a is in the form of a bottomed cylinder with a female thread on its inner surface. The opening section 2 of the fuel tank 1 has a male thread on its outer surface. Screwing the male thread into the female thread fixes the cap 3 to the fuel tank 1. The lid 3a has a bottom as the upper face 3c, to which the substrate holder 30 is fixed. The fixing section 3b extends radially outward from the side surface of the lid 3a. The fixing section 3b has an outer edge as a circumferential wall 3d extending perpendicularly to the radial direction and having a female thread 3e (which is an example engagement section) on its inner surface.

The housing 10 is made of resin or metal and in the form of a bottomed cylinder with an inner diameter larger than the outer diameter of the cap 3. The housing 10 includes a circumferential wall 10a having a male thread 10b (which is an example engaging section) on its outer surface. With the substrate holder 30 and the sensor module 100 fixed to the cap 3, the male thread 10b is screwed in the female thread 3e. The housing 10 is provided with a ring-shaped seal 15 (see Fig. 4) at the boundary between the circumferential wall 10a and the circumferential wall 3d. This structure forms a water-tight first space 11 (which is an example closed space) blocked by the cap 3 and the housing 10 and containing the sensor module 100.

The female thread 3e and the male thread 10b may be switched around as follows: The circumferential wall 3d has a male thread (which is an example engagement section) on its outer surface. The circumferential wall 10a has a female thread (which is an example engaging section). The male thread is screwed in the female thread. The housing 10 is provided with a ring-shaped seal 15 at the boundary between the circumferential wall 10a and the circumferential wall 3d. This structure also forms a water-tight first space 11 blocked by the cap 3 and the housing 10 and containing the sensor module 100. The seal 15, which serves to maintain the water-tight state, may be in the form of an O ring, a caulk, a water-repellent agent applied to the threaded portion, or any other means. Figs. 2 and 3 omit the seal 15.

### [Operation of Sensor Module]

The description below deals with how the sensor module 100 operates, with reference to Fig. 4. The sensor module 100, which is disposed outside the cap 3 of the fuel tank 1, transmits an electric wave from the transmission antenna (not illustrated in the drawings) of the transmission and reception IC 21 on the first substrate 40 toward the internal space 1a of the fuel tank 1 at predetermined time intervals (for example, every 10 minutes) which electric wave results from modulation of a transmission pulse signal generated by the transmission and reception IC 21. The transmission antenna transmits a millimeter electric wave that passes through the lens section 32 and the cap 3, which are made of resin, and that is reflected by kerosene 5. The electric wave is, for example, an electromagnetic pulse. The electric wave enters the internal space 1a of the fuel tank 1 and is reflected by the surface 5a of kerosene 5 to travel toward the sensor module 100 as a reflected wave. The reflected wave passes through the cap 3 and the lens section 32 to be received by the reception antenna (not illustrated in the drawings). The reflected wave (electromagnetic pulse), which has been received by the reception antenna, is demodulated into a reception pulse signal and then inputted into the computation IC 22. The computation IC 22 measures the time interval from the transmission of the electromagnetic pulse by the transmission antenna to the reception of the reflected wave by the reception antenna (hereinafter referred to also as "propagation time period"), and computes the amount of kerosene 5 remaining in the internal space 1a on the basis of the propagation time period. The computation IC 22 stores in advance information on a propagation time period (hereinafter referred to also as "full-tank propagation time period") for the case of kerosene 5 being stored in the internal space 1a sufficiently, that is, up to an upper limit (hereinafter referred to also as "full-tank amount"), and computes the remaining amount of kerosene 5 from the ratio or difference between the full-tank propagation time period and the current propagation time period. The computation IC 22 may alternatively store information on a propagation time period for the case of kerosene 5 being absent or 50% full and compute the remaining amount of kerosene 5 on the basis of such a propagation time period, regardless of the comparison between the full-tank propagation time period and the current propagation time period.

The computation IC 22, in response to the remaining amount of kerosene 5 in the fuel tank 1 becoming, for example, 50% or less of the full-tank amount (hereinafter referred to also as "predetermined amount or less"), transmits a signal indicative of the remaining amount of kerosene 5 through the connection member 80 to the external communication IC 90. The external communication IC 90, in response to receiving a signal indicative of the remaining amount of kerosene 5 from the computation IC 22, transmits from the external communication antenna 91 to a device external to the sensor module 100 a radio signal indicative of the remaining amount of kerosene 5 and a unique number representative of the fuel tank 1. The radio signal is received by, for example, a fuel retailer or management company, which is thereby informed of the amount of kerosene 5 remaining in the fuel tank 1. The signal outputted by the computation IC 22 and the radio signal transmitted from the external communication IC 90 may each be, instead of the remaining amount of kerosene 5, the ratio of the remaining amount of kerosene 5 to the full-tank amount.

The sensor module 100 allows a fuel retailer or management company, for example, to receive a radio signal from the external communication antenna 91 in response to kerosene 5 in the fuel tank 1 having a predetermined amount or less to be informed of the remaining amount of kerosene 5 every 10 minutes. This eliminates the need for such a fuel retailer or management company to visit different places equipped with respective fuel tanks 1 to measure the amount of kerosene 5 remaining in each fuel tank 1. The fuel retailer or management company, which has been informed that kerosene 5 remaining in a fuel tank 1 has a predetermined amount or less, refills the fuel tank 1 with kerosene 5 appropriately. The sensor module 100 may alternatively allow the owner of a fuel tank 1 to receive a radio signal from the external communication antenna 91 at home to be informed of the remaining amount of kerosene 5 every 10 minutes. The owner, in response to kerosene 5 in the fuel tank 1 having a predetermined amount or less, requests a fuel retailer or management company to refill the fuel tank 1 with kerosene 5.

### [Effects of Sensor Module]

The sensor module 100 as the present embodiment is disposed outside the cap 3. This eliminates the need to modify an existing fuel tank 1 to provide the sensor module 100 for the fuel tank 1 for the computation of the amount of kerosene 5 remaining in the fuel tank 1. The sensor module 100, which computes the remaining amount of kerosene 5 with use of an electric wave, easily detects (or computes) two or more remaining amounts of kerosene 5, as compared to the conventional case of measuring the position of an indicator. The sensor module 100 causes an electric wave to be directly reflected by kerosene 5 and computes a time interval extending until receipt of the electric wave for the computation of the remaining amount of kerosene 5. This allows a single sensor module 100 to detect the remaining amount of kerosene 5 with high resolution.

The sensor module 100 as the present embodiment is fixed stably to the cap 3 with the bottom wall 31 of the lens section 32 in contact with the upper face 3c of the cap 3. The sensor module 100 allows the transmission and reception IC 21 of the sensor section 20 to face the lens section 32 of the substrate holder 30 which lens section 32 has a lens function and includes the bottom wall 31. While the electric wave transmitted from the transmitter 21a and the reflected wave resulting from the electric wave being reflected by kerosene 5 pass through the upper face 3c and the lens section 32 sequentially, the sensor module 100 prevents the electric waves from being reflected at the boundary between the upper face 3c and the bottom wall 31.

The sensor module 100 as the present embodiment keeps the bottom wall 31 in contact with the upper face 3c and allows the transmission and reception IC 21 to face the bottom wall 31, regardless of the height of the cap 3, which height can vary depending on the type of fuel tank 1. This allows the sensor module 100 to transmit and receive electric waves more efficiently.

The sensor module 100 as the present embodiment prevents entry of rain water into the first space 11 when disposed outdoors.

The sensor module 100 as the present embodiment eliminates the need to, for example, see inside the fuel tank 1 and informs a person at a remote place of the remaining amount of kerosene 5.

The sensor module 100 as the present embodiment uses a millimeter electric wave that passes through resin. This allows the sensor module 100, disposed outside the resin cap 3, to compute the amount of kerosene 5 remaining in the fuel tank 1 with the cap 3 in-between. If the sensor module 100 used light such as infrared light or visible light as the electric wave, the cap 3 would need to be made partially or entirely of transparent or semitransparent resin or have a hole for passage of the electric wave. The use of a millimeter electric wave eliminates the need for the cap 3 to be made of a transparent or semitransparent material or have a hole. The use of a millimeter electric wave allows the cap 3 to be made of a colored insulating material that prevents passage of light and eliminates the need for the cap 3 to have a hole, which will impair watertightness. If the cap 3 is made of metal, replacing it with a dedicated resin cap 3 available from the manufacturer of the fuel tank 1 allows the sensor module 100 to compute the amount of kerosene 5 remaining in the fuel tank 1 with the cap 3 in-between. The manufacturer guarantees safety of the attachment of the dedicated resin cap 3 to the opening section 2. This prevents the sensor module 100 from impairing the functional reliability of the fuel tank 1.

### [Variation of First Embodiment]

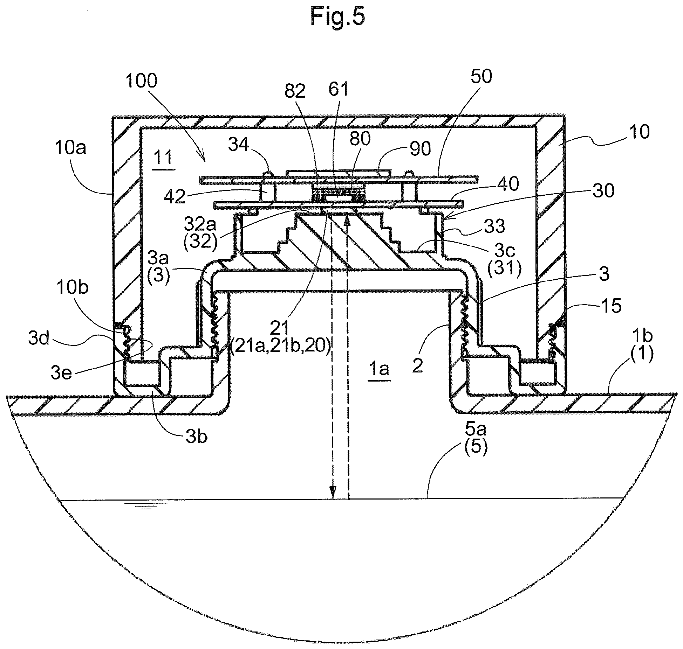

The description below deals with a variation of the first embodiment of this disclosure. The present variation is, as illustrated in Fig. 5, similar to the first embodiment except that the cap 3 is integral with the substrate holder 30. The description below of the present variation uses identical reference signs for elements similar to corresponding elements of the first embodiment, and omits to detail such similar elements.

The present variation is configured such that the cap 3 is integral with the substrate holder 30. The cap 3 has an upper face 3c corresponding to the bottom face of the bottom wall 31 of the substrate holder 30 for the first embodiment. The present variation eliminates the need for the man-hour to fix the substrate holder 30 to the upper face 3c of the cap 3 to close the gap between the bottom wall 31 of the substrate holder 30 and the upper face 3c.

### [Second Embodiment]

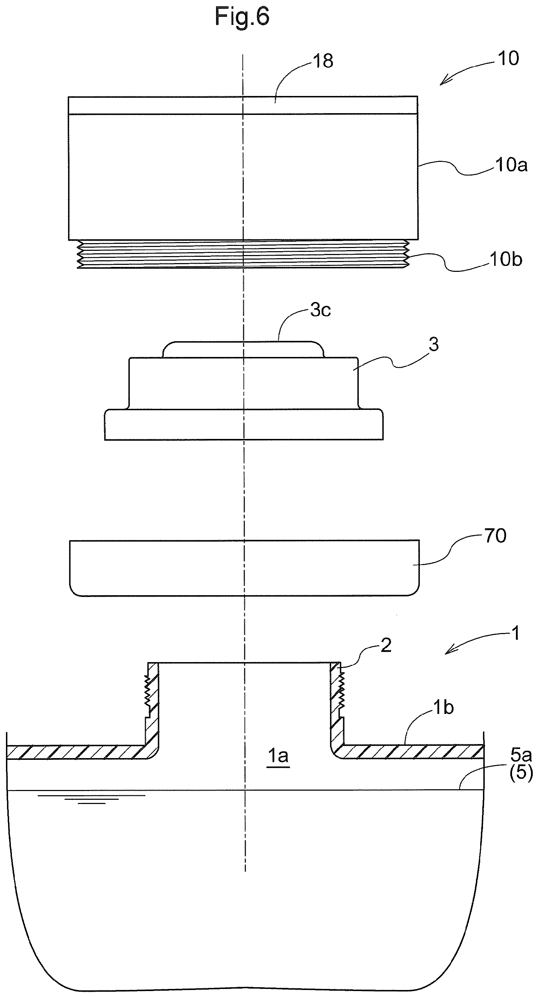

The description below deals with a second embodiment of this disclosure with reference to Figs. 6 to 9. The present embodiment is similar to the first embodiment except for the respective configurations of the cap 3 and the housing 10 and how the first substrate 40 and the second substrate 50 are supported. The description below of the present embodiment uses identical reference signs for elements similar to corresponding elements of the first embodiment, and omits to detail such similar elements.

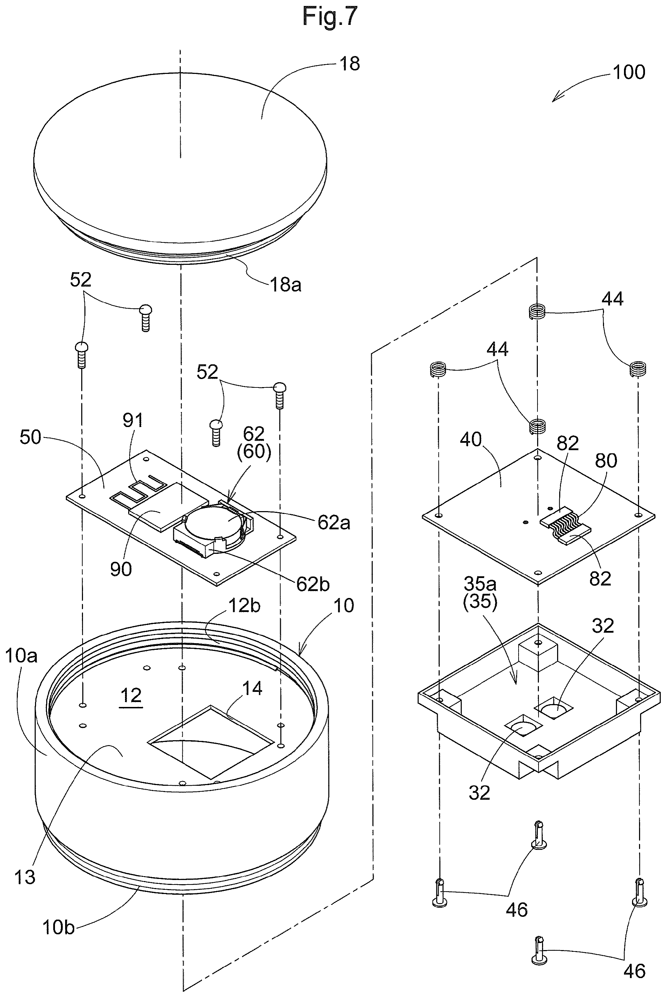

As illustrated in Figs. 7 to 9, the sensor module 100 as the present embodiment includes a housing 10, a sensor section 20, a lens section 32, a cover 35, and a lid 18. The housing 10 is made of resin or metal and in the form of a cylinder with an inner diameter larger than the outer diameter of the cap 3. The cylindrical housing 10 contains a first space 11 (which is an example closed space) and a second space 12 separated from each other by a partition wall 13. The partition wall 13 has a depression 13a depressed from the first space 11 toward the second space 12 and having a rectangular cross section. The partition wall 13 includes a bottom wall section 13b disposed at the bottom of the depression 13a and having a communication hole 14 in the form of a rectangular through hole communicating the first space 11 with the second space 12.

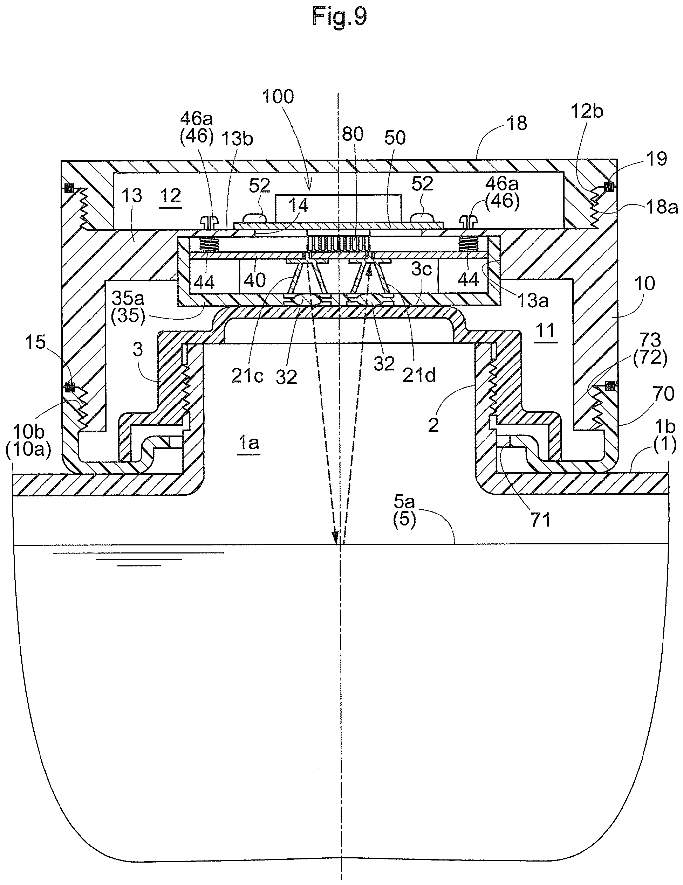

The sensor section 20 includes a transmission and reception IC 21, a transmission antenna 21c (which is an example transmission and reception section and an example transmitter), a reception antenna 21d (which is an example transmission and reception section and an example receiver), and a computation IC 22 on a first face of the first substrate 40, the opposite face of which faces the bottom wall section 13b of the housing 10. The first face of the first substrate 40 does not face the bottom wall section 13b. The first substrate 40 is in the depression 13a in the first space 11 of the housing 10 (see Fig. 9) and has an outer shape slightly smaller than the internal dimension of the depression 13a. The first substrate 40 is held by the bottom wall section 13b with four compression coil springs 44 (which is an example urging member) in-between.

The lens section 32 is provided for the cover 35, which is made of resin and in the form of a bottomed angular barrel. The cover 35 is fitted in the depression 13a in the first space 11, and contains the first substrate 40. The cover 35 covers the transmission and reception IC 21, the transmission antenna 21c, the reception antenna 21d, and the computation IC 22, which are mounted on the first substrate 40. The cover 35 may contain the entire first substrate 40 as illustrated in Fig. 9, or may not do so such that the cover 35 is apart from the first substrate 40 with a gap between the side surface of the cover 35 and the first substrate 40 which gap allows a person to see at least one of or at least a portion of the transmission and reception IC 21, the transmission antenna 21c, the reception antenna 21d, and the computation IC 22.

The cover 35 is supported by the bottom wall section 13b of the depression 13a with use of, for example, four support pins 46 each in the form of a split pin with a nail 46a. Specifically, the support pins 46 extend from outside the cover 35 through respective four holes in each of the cover 35, the first substrate 40, and the bottom wall section 13b. The nail 46a of each support pin 46 enters the second space 12 and is hooked on the partition wall 13 for the cover 35 to be supported. The support pins 46 extend through the respective compression coil springs 44 between the first substrate 40 and the bottom wall section 13b. The compression coil springs 44 elastically press the cover 35 and the first substrate 40 away from the bottom wall section 13b to press the respective leading ends of the transmission antenna 21c and the reception antenna 21d against the bottom wall 35a of the cover 35 for close contact. Pressing the cover 35 with use of the compression coil springs 44 reliably keeps the cover 35, the transmission antenna 21c, and the reception antenna 21d in close contact with the upper face 3c of the cap 3, regardless of the height of the cap 3, which height can vary depending on the type of fuel tank 1. The cover 35 and the first substrate 40 may be fixed to the bottom wall section 13b with use of screws instead of the support pins 46. At least one of the respective leading ends of the transmission antenna 21c and the reception antenna 21d may be away from the bottom wall 35a.

The present embodiment allows the bottom wall 35a to have a lens function by, for instance, changing the thickness of the bottom wall 35a, which faces the respective leading ends of the transmission antenna 21c and the reception antenna 21d, to provide a lens section 32. The bottom wall 35a having a lens function allows the sensor module 100 to transmit and receive electric waves more efficiently. The lens section 32 for the present embodiment is in the form of a convex lens. The lens section 32 may alternatively be in the form of a concave lens. The lens section 32 may have any shape depending on the purpose. The bottom wall 35a may alternatively have no lens function.

The second space 12 of the housing 10 contains the second substrate 50. The first substrate 40 and the second substrate 50 are electrically connected to each other by a connection member 80 in the communication hole 14. The second substrate 50 is provided with the battery section 62 (which includes a battery 62a as a power source for operating the sensor module 100 and a battery socket 62b) and the external communication IC 90. The second substrate 50 is also provided with an external communication antenna 91 in a pattern thereon configured to transmit a signal generated by the external communication IC 90 to an external device. The second substrate 50 is fixed to the partition wall 13 with use of four screws 52.

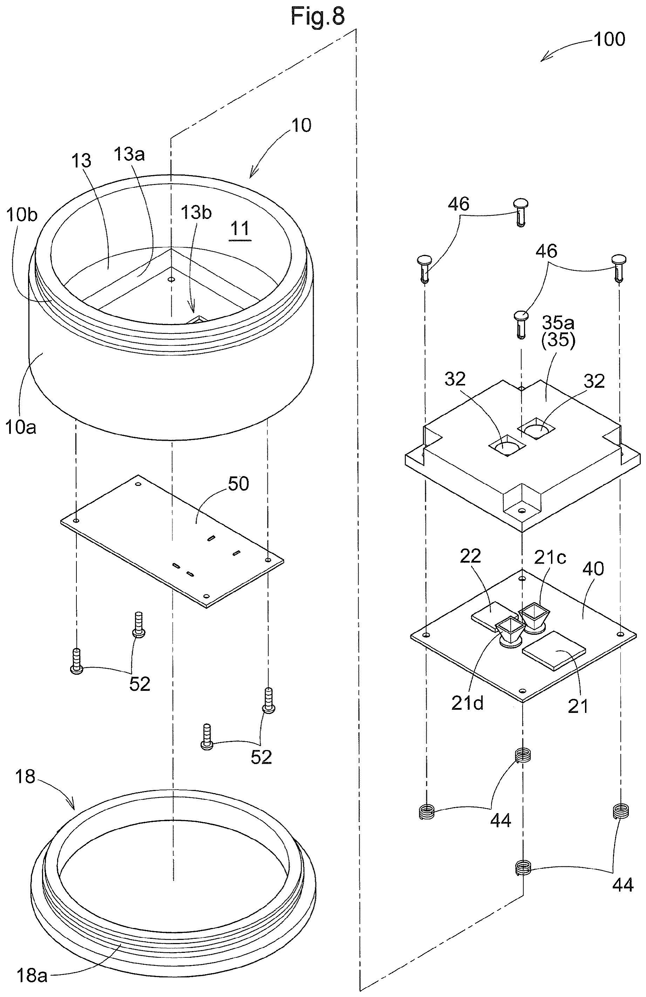

The second space 12 is defined by the circumferential wall 10a of the housing 10, the circumferential wall 10a having a female thread 12b on its inner surface. The lid 18 has a male thread 18a, which is screwed in the female thread 12b to close the second space 12. The housing 10 is provided with a ring-shaped seal 19 at the boundary between the circumferential wall 10a and the lid 18 (see Fig. 9) to keep the second space 12 water-tight. The lid 18 is made of resin. Figs. 7 and 8 omit the seal 19.

The sensor module 100 as the present embodiment is engageable with a fixing member 70 (which is an example engagement member) to be fixed to the cap 3. The fixing member 70 is in the form of a disc with a central through hole 71, and includes a circumferential wall 72 in the form of a ring-shaped side wall standing on the entire circular edge. The through hole 71 has an inner diameter that allows the opening section 2 of the fuel tank 1 to be fitted therein. The circumferential wall 72 has a female thread 73 (which is an example engagement section) on its inner surface. Screwing the cap 3 in the opening section 2 with the fixing member 70 fitted around the opening section 2 blocks the opening section 2 and holds the fixing member 70 between the tank body 1b and the cap 3 such that the fixing member 70 is fixed to the fuel tank 1.

The first space 11 in the housing 10 is defined by a circumferential wall 10a having a male thread 10b (which is an example engaging section) on its outer surface. With the fixing member 70 fixed to the fuel tank 1, the male thread 10b is screwed in the female thread 73 of the fixing member 70 to fix the sensor module 100 to the cap 3 (or the fuel tank 1) such that the bottom wall 35a of the cover 35 is in contact with the upper face 3c of the cap 3. The housing 10 is provided with a ring-shaped seal 15 at the boundary between the circumferential wall 10a and the circumferential wall 72 of the fixing member 70 (see Fig. 9) to keep the first space 11 water-tight, the first space 11 being defined by the cap 3 and the fixing member 70. Figs. 7 and 8 omit the seal 15.

The sensor module 100 as the present embodiment is provided with a fixing member 70 to be detachably fixed to the cap 3 of the fuel tank 1 without the need to modify the fuel tank 1.

### [Alternative Embodiments]

(1) If the sensor module 100 as the first embodiment is configured such that the substrate holder 30 and the cap 3 are two separate elements, the substrate holder 30 may be fixed to the cap 3 with use of double-side tape or the like for the bottom wall 31 of the substrate holder 30 to be in contact with the upper face 3c of the cap 3. The present invention is, however, not limited to such a configuration. The substrate holder 30 may be supported by the housing 10 or by the first substrate 40, which is in turn supported by the housing 10. The substrate holder 30 may, in other words, be supported by the housing 10 directly or indirectly.
(2) The second embodiment is configured such that the fixing member 70 is held by and between the cap 3 and the tank body 1b to be fixed to the fuel tank 1. The present invention is, however, not limited to such a configuration. The fixing member 70 may be (i) bonded or otherwise integrated with the cap 3 to be fixed to the fuel tank 1, (ii) produced integrally with the fuel tank 1 to be fixed thereto, or (iii) bonded or otherwise fixed to the fuel tank 1. The fixing member 70 may be fixed to the fuel tank 1 in any manner that ensures stable fixation.
(3) The second embodiment is configured such that the fixing member 70 and the housing 10 are separate from each other. The fixing member 70 and the housing 10 may alternatively be hinged or otherwise joined to each other for integration.
(4) The second embodiment includes a housing 10 configured to house the sensor module 100 and screwed with the fixing member 70 for fixation. The present invention is, however, not limited to such a configuration; for instance, the housing 10 may have a circumferential wall 10a press-fitted with the circumferential wall 72 of the fixing member 70 for fixation.
(5) The embodiments described above each include a transmission and reception IC 21 and a computation IC 22 on a first substrate 40 and an external communication IC 90 on a second substrate 50. The ICs may each be mounted on either substrate.
(6) The second embodiment includes compression coil springs 44 to bring the cover 35 and the first substrate 40 into close contact with the upper face 3c of the cap 3. The present invention is, however, not limited to such a configuration. The compression coil springs 44 may each be replaced with a leaf spring or an elastic rubber. The male thread 10b may be screwed in the female thread 73 for the bottom wall 35a of the cover 35 to be in contact with the upper face 3c.
(7) The embodiments described above are each a sensor module 100 operable by a battery 62a. The sensor module 100 may alternatively be operable by a commercial power supply.
(8) The first embodiment may include a lens section 32 including the bottom wall 31 of the substrate holder 30 and having a lens function. The second embodiment may include a lens section 32 including the bottom wall 35a of the cover 35 and having a lens function. The present invention is, however, not limited to such configurations. If the cap 3 may be reshaped to be suitable for the sensor module 100, the cap 3 may have an upper face 3c with a lens function. The lens function may be imparted to both the substrate holder 30 or cover 35 and the cap 3. Such an embodiment may be configured, for instance, such that the substrate holder 30 or cover 35 includes a lens section 32 with a lens function for an electric wave transmitted from the transmission antenna, whereas the cap 3 has a lens function for a reflected wave received at the reception antenna.
(9) The embodiments described above are each configured to transmit a radio signal indicative of the remaining amount of kerosene 5 every 10 minutes after the remaining amount becomes 50% or less. The present invention is, however, not limited to such a configuration. The sensor module 100 may be configured to, for instance, transmit a radio signal in response to the remaining amount of kerosene 5 becoming 40%, 30%, and 20%, that is, in response to each 10% decrease, after the remaining amount becomes 50% or less. The sensor module 100 may be configured to, for instance, transmit a radio signal in response to each 3% decrease of kerosene 5 after the remaining amount becomes 20% or less. Increasing the frequency of radio signal transmission as the fuel tank 1 becomes closer to an empty state reliably allows the fuel tank 1 to be refilled with kerosene 5 before the fuel tank 1 becomes empty.

### INDUSTRIAL APPLICABILITY

This disclosure is applicable to a sensor module.

### REFERENCE SIGNS LIST

- 1: Fuel tank (container)
- 2: Opening section
- 3: Cap
- 3c: Upper face
- 3e: Female thread (engagement section)
- 5: Kerosene (content)
- 10: Housing
- 10b: Male thread (engaging section)
- 11: First space (closed space)
- 15: Seal
- 20: Sensor section
- 21: Transmission and reception IC (transmission and reception section)
- 21a: Transmitter
- 21b: Receiver
- 21c: Transmission antenna (transmission and reception section, transmitter)
- 21d: Reception antenna (transmission and reception section, receiver)
- 22: Computation IC (computation section)
- 31: Bottom wall
- 32: Lens section
- 44: Compression coil spring (urging member)
- 60: Electric power source
- 70: Fixing member (engagement member)
- 90: External communication IC (external communication section)
- 100: Sensor module

## Claims

1. A sensor module placeable outside a cap attachable to an opening section of a container containing a content, the sensor module being configured to be housed in a housing,
the sensor module comprising:
a sensor section; and
a lens section,
wherein the sensor section includes:
a transmission and reception section including:
a transmitter configured to transmit an electric wave; and
a receiver configured to receive the electric wave; and
a computation section,
the transmitter transmits an electric wave that passes through the cap into the container,
the receiver receives a reflected wave resulting from the electric wave being reflected by the content in the container,
the lens section faces the transmission and reception section and includes a bottom wall that allows passage of the electric wave that the transmitter transmits and the reflected wave, and
the computation section is configured to compute a remaining amount of the content, based on a time interval from (i) the transmitter transmitting the electric wave to (ii) the receiver receiving the reflected wave.

2. The sensor module according to claim 1, wherein
the bottom wall is in contact with an upper face of the cap.

3. The sensor module according to claim 1, wherein
the housing includes an engaging section,
the cap includes an engagement section,
the engaging section is engageable with the engagement section for the housing to be detachably fixed to the container, and
the lens section is integral with the cap.

4. The sensor module according to claim 1, further comprising:
an urging member urging the lens section toward an upper face of the cap,
wherein the the lens section is held by the housing with the urging member in-between.

5. The sensor module according to claim 1, wherein
the housing includes an engaging section,
the cap includes an engagement section, and
the engaging section is engageable with the engagement section for the housing and the cap to define a water-tight closed space.

6. The sensor module according to claim 1, wherein
the housing includes an engaging section engageable with an engagement section of an engagement member fixable to the container, and
the engaging section is engageable with the engagement section for the housing, the engagement member, and the cap to define a water-tight closed space.

7. The sensor module according to any one of claims 1 to 6, further comprising:
an electric power source; and
an external communication section, wherein
the electric power source is configured to supply electric power to the sensor section and the external communication section, and
the external communication section is configured to transmit to an external device a radio signal indicative of the remaining amount.
